# EUROPÄISCHE PATENTSCHRIFT

(11) **EP 2 313 198 B1**
(45) Veröffentlichungstag und Bekanntmachung des Hinweises auf die Patenterteilung: **16.08.2023**
(21) Anmeldenummer: 09776583.8
(22) Anmeldetag: 05.05.2009
(51) Int. Cl.: B01L 99/00, G01N 35/00

(54) **LABORGERÄTE-EINHEIT MIT EINEM LABORGERÄT UND MIT EINER FERNBEDIENUNG**
LABORATORY DEVICE UNIT HAVING A LABORATORY DEVICE AND A REMOTE CONTROL
ENSEMBLE APPAREIL DE LABORATOIRE COMPRENANT UN APPAREIL DE LABORATOIRE ET UNE TÉLÉCOMMANDE

(30) Priorität: 07.08.2008 DE 102008036860
(43) Veröffentlichungstag der Anmeldung: 27.04.2011
(73) Patentinhaber: IKA - Werke GmbH & Co. KG, 79219 Staufen (DE)
(72) Erfinder: EBLE, Erhard, 79189 Bad Krozingen (DE)
(74) Vertreter: Kunst, Manuel Nikolaus Johannes
(86) Internationale Anmeldenummer: PCT/EP2009/003193
(87) Internationale Veröffentlichungsnummer: WO 2010/015290

(56) Entgegenhaltungen:
- DE-A1- 19 911 397
- DE-A1- 19 911 397
- DE-A1- 19 911 397
- DE-U1-202005 019 472
- JP-A- 2003 329 691
- JP-A- 2003 329 691
- JP-A- 2005 052 687
- US-A- 6 063 030
- US-A- 6 063 030
- US-A1- 2003 182 087
- US-A1- 2003 182 087
- US-A1- 2004 160 410
- US-A1- 2004 160 410
- US-A1- 2005 128 183
- US-A1- 2005 128 183
- US-A1- 2008 182 301
- US-A1- 2008 182 301
- US-A1- 2008 182 301
- R Wobser: "LAUDA Betriebsanleitung Ecoline Staredition, Kältethermostate RE 304, RE 305, RE306, RE307, RE310, RE 312, RE 320", , 23. September 2005 (2005-09-23), Seiten 1-91, XP055533689, Gefunden im Internet: URL:http://www.hvg-verwertung.de/ebay/doku mentation/Lauda/RE3xx.pdf [gefunden am 2018-12-12]
- R Wobser: "LAUDA Betriebsanleitung Ecoline Staredition, Kältethermostate RE 304, RE 305, RE306, RE307, RE310, RE 312, RE 320", , 23 September 2005 (2005-09-23), pages 1-91, XP055533689, Retrieved from the Internet: URL:http://www.hvg-verwertung.de/ebay/doku mentation/Lauda/RE3xx.pdf [retrieved on 2018-12-12]

## Beschreibung

Die Erfindung betrifft eine Laborgeräte-Einheit mit einem Laborgerät zum Bearbeiten von Substanzen, Mischungen oder Medien und mit einer Fernbedienung für die in dem Laborgerät vorhandenen oder veränderbaren Stellgrößen und/oder erfassbaren Messgrößen.

Derartige Laborgeräte-Einheiten sind beispielsweise aus der DE 199 11 397 A1 bekannt. Bei diesen Laborgeräte-Einheiten wirken Geräte über drahtlose Schnittstellen mit einem PC und einer einfachen Fernbedienung zusammen, wobei der PC und die einfache Fernbedienung jeweils für sich den vollen Funktionsbereich der Geräte ansteuern.

Aus der US 2008/0182301 A1 ist ein Laborgerät mit mehreren Verbindungsmöglichkeiten, z.B. Verbindungen für ein lokales Netzwerk mit mehreren Computern oder eine Infrarot-Schnittstelle für eine Fernbedienung, bekannt, um das Laborgerät in seinem vollen Funktionsumfang zu steuern.

Aus der Druckschrift JP 2003 329 691 A ist eine biochemische Analysevorrichtung vorbekannt, die in der Lage ist, mehrere Proben zu messen. Die Analysevorrichtung kann von einem geschulten Bediener entsprechend seines vollen Funktionsumfangs bedient werden. Um auch einem unerfahrenen Bediener, der mit der Bedienung nicht vertraut ist, die Bedienung des Analysegerätes zu ermöglichen, kann eine Benutzerschnittstelle des Analysegerätes durch Betätigen einer Bildschirmumschalttaste in einen vereinfachten Bedienmodus umgeschaltet werden, bei dem für die einfache Bedienung unnötige Bedientasten ausgeblendet sind.

Aus der Druckschrift US 2003/182087 A1 ist eine Analysevorrichtung vorbekannt, die im vernetzten Betrieb, beispielsweise über das Internet, von mehreren Benutzern verwendet werden kann, die über unterschiedliche Autorisierungen verfügen.

Aus der Druckschrift US 6 063 030 A ist schließlich ein PCbasiertes Ultraschallsystem vorbekannt, das Standard-PC-Komponenten verwendet.

Im Zuge der Weiterentwicklung der verfügbaren Laborgeräte erhalten diese häufig ein umfangreiches Leistungsspektrum und werden mit vielen verschiedenen Funktionen ausgerüstet. Dies hat zur Folge, dass auch die zur Bedienung vorgesehenen Fernbedienungen immer aufwändiger gestaltet werden, um den vollen Funktionsumfang des Laborgerätes nutzbar zu machen.

Andererseits besteht häufig das Bedürfnis nach kostengünstigen Laborgeräten, die einfachen Anforderungen genügen.

Um diesen Bedürfnissen zu entsprechen, sind Hersteller dazu übergegangen, Baureihen von Laborgeräten anzubieten, bei denen sich die verschiedenen Varianten der Laborgeräte durch eine unterschiedliche Leistungsfähigkeit oder durch ein unterschiedlich umfangreiches Leistungsspektrum, beispielsweise einen unterschiedlich großen Stell- und/oder Messbereich einer Verfahrensgröße beim Einsatz des Laborgerätes, unterscheiden.

Der Erfindung liegt die Aufgabe zugrunde, die Herstellung einer Baureihe von Laborgeräten zu vereinfachen und die Herstellungskosten zu verringern.

Zur Lösung dieser Aufgabe sieht die Erfindung die Merkmale des Anspruchs 1 vor. Zur Lösung der Aufgabe wird erfindungsgemäß somit eine Laborgeräte-Einheit zum Bearbeiten von Substanzen, Mischungen oder Medien mit einem Laborgerät und mit einer Fernbedienung für die in dem Laborgerät vorhandenen oder veränderbaren Stellgrößen und/oder erfassbaren Messgrößen vorgeschlagen, wobei das Laborgerät hinsichtlich seiner Stell- und/oder Messgrößen mit einem vollen Stell- und/oder Messbereich ausgestattet ist. Die Laborgeräte-Einheit ist dadurch gekennzeichnet, dass die Fernbedienung auf den vollen Bereich der am Laborgerät vorhandenen und/oder veränderbaren Stellgrößen und/oder erfassbaren Messgrößen ausgelegt ist, und dass Funktionen der Fernbedienung elektronisch und/oder durch Software derart freischaltbar gesperrt sind, dass nur ein eingeschränkter Stell- und/oder Messbereich des Laborgeräts betätigbar und/oder nur ein Teil der Stell- und/oder Messgrößen des Laborgeräts abrufbar oder ansteuerbar oder regelbar ist, wobei das Laborgerät als Stellgröße eine Wiegefunktion aufweist und/oder ein Rührgerät oder ein Dispergiergerät oder ein Magnetrührer ist.

Bei einer Ausführungsform der Laborgeräte-Einheit kann beispielsweise vorgesehen sein, dass das Laborgerät hinsichtlich seiner Stell- und/oder Messgröße mit einer hohen Leistungsfähigkeit und/oder einem großen Leistungsspektrum und/oder mit einem großen Stell- und/oder Messbereich ausgestattet ist und dass wenigstens zwei unterschiedliche Fernbedienungen vorgesehen sind und dass eine der Fernbedienungen zur Betätigung des Laborgeräts mit großer Leistungsfähigkeit und/oder großem Leistungsspektrum und/oder in einem großen Stell- und/oder Messbereich und die andere Fernbedienung zur Betätigung des Laborgerätes in einem bezüglich Leistung und/oder Spektrum und/oder Stell- und/oder Messbereich eingeschränkten Umfang ausgelegt ist. Hierdurch ist vorteilhaft erreicht, dass durch Kombination des Laborgerätes mit der einen oder der anderen Fernbedienung zwei unterschiedliche Varianten einer Laborgeräte-Einheit bereitgestellt sind, bei denen ein unterschiedlicher Umfang des Leistungsspektrums und/oder der Leistungsfähigkeit und/oder des Stell- und/oder Messbereichs des Laborgeräts nutzbar ist. Insbesondere verhält sich das Laborgerät mit der anderen Fernbedienung, die also zur Betätigung des Laborgeräts in einem bezüglich Leistung und/oder Spektrum und/oder Stell- und/oder Messbereich eingeschränkten Umfang ausgelegt ist, für den Benutzer als ein Laborgerät mit tatsächlich eingeschränktem Umfang.

Die Erfindung macht sich somit die überraschende Erkenntnis zunutze, dass der Mehraufwand, bei einem Laborgerät mit einer Fernbedienung nicht nutzbare Funktionen und/oder nicht zu gängliche Stell- und/oder Messbereiche vorzusehen, gering ist im Vergleich zu dem Aufwand, der sich durch die separate Fertigung einzelner Varianten einer Baureihe von Laborgeräte-Einheiten ergibt. Zusätzlich sind die Lagerhaltungskosten für die Bereithaltung der Einzelkomponenten zur Fertigung der Varianten der Baureihe reduzierbar und die Varianten der Baureihe sind durch Ausgestaltung der Fernbedienungen einfach an spezielle Kundenanforderungen anpassbar, wobei das den Hauptteil der Entwicklungsarbeit erfordernde Laborgerät keiner Anpassung bedarf. Jeder Benutzer nimmt somit seine Laborgeräte-Einheit als auf ihn zugeschnitten wahr.

Die Erfindung bietet den zusätzlichen Vorteil, dass eine Laborgeräte-Einheit mit eingeschränktem Leistungsumfang und/oder Leistungsspektrum durch Austausch der Fernbedienungen in eine Laborgeräte-Einheit mit erweitertem Leistungsspektrum nachträglich auf einfache Weise umwandelbar ist.

Durch die mit den unterschiedlichen Fernbedienungen zugänglichen Leistungsspektren des Laborgeräts werden somit nach außen hin unterschiedliche Laborgeräte-Einheiten für den Anwender bereitgestellt. Hierbei kann durch die entsprechende Ausgestaltung der Fernbedienungen erreicht sein, dass sich die Laborgerät-Varianten einer Baureihe in aufsteigender Ordnung hinsichtlich eines zunehmenden nutzbaren Leistungsspektrum gedanklich ordnen lassen oder dass verschiedene Laborgerät-Varianten mit unterschiedlichen Leistungsspektren, beziehungsweise unterschiedlicher Leistungsfähigkeit, bereitgestellt sind, die zwar gemeinsame Schnittmengen aufweisen, bei denen aber ein Leistungsspektrum beziehungsweise eine Leistungsfähigkeit der einen Geräte-Einheit nicht die der anderen Geräte-Einheit vollständig umfasst. Vorzugsweise ist jedoch eine Fernbedienung vorgesehen, die zur Betätigung der vollen Leistungsfähigkeit und/oder des vollen Leistungsspektrums und/oder des vollen Stell- und/oder Messbereichs des Laborgeräts ausgelegt ist, wobei die zweite Fernbedienung nur für die Betätigung eines eingeschränkten Bereichs der Leistungsfähigkeit und/oder des Leistungsspektrums und/oder des Stell- und/oder Messbereichs des Laborgeräts ausgelegt ist. Somit ist mit der einen Fernbedienung die vollständige, am Laborgerät für eine Nutzung vorgesehene Leistungsvielfalt verwendbar.

Zur Erhöhung der Variantenvielfalt der Baureihe kann vorgesehen sein, dass wenigstens eine weitere Fernbedienung vorgesehen ist, die für Zwischenwerte betreffend die Leistungsfähigkeit und/oder das Leistungsspektrum und/oder den Stell- und/oder Messbereich des Laborgeräts ausgelegt ist. Eine solche Fernbedienung ist je nach Anwendungserfordernis auslegbar beziehungsweise konfigurierbar.

Eine besonders einfache Variante, die für reduzierte Anforderungen ausreichend ist, ergibt sich, wenn eine zusätzliche Fernbedienung vorgesehen ist, mit welcher nur ein Teil der Stellgrößen und/oder Messgrößen des Laborgeräts abrufbar oder ansteuerbar oder regelbar ist. Beispielsweise kann vorgesehen sein, dass das Laborgerät eine Funktion zum Aufheizen einer Substanz und eine Funktion zum Vermischen dieser Substanz, insbesondere bei verschiedenen Drehzahlen, aufweist, indem die entsprechenden technischen Mittel wie eine Heizung oder ein Antriebsmittel für eine Rührfunktion an dem Laborgerät ausgebildet sind. In diesem Fall kann eine besonders einfache Variante der Laborgeräte-Einheit dadurch gebildet sein, dass mit einer Fernbedienung nur die Heizfunktion beziehungsweise nur die Rührfunktion ansteuerbar ist, oder dass nur ein bestimmter Stellbereich der beim Rühren verwendeten Drehzahl ansteuerbar ist, während eine weitere Fernbedienung die Ansteuerung eines erweiterten Stellbereichs beziehungsweise beider Funktionen ermöglicht. Beispielsweise kann in einer weiteren Ausgestaltung vorgesehen sein, dass das Laborgerät über eine Wiegefunktion verfügt, mit der die Masse einer in einer Aufnahme des Laborgeräts befindlichen Substanz bestimmbar ist, wobei mit einer für eine einfache Laborgerät-Variante bestimmten Fernbedienung die Daten dieser Wiegevorrichtung nicht auslesbar sind, während eine weitere Fernbedienung die Messdaten dieser Wiegevorrichtung auslesen und zur Anzeige bringen kann.

Zur Ausgestaltung der Fernbedienungen, mit denen unterschiedliche Leistungsspektren und/oder unterschiedliche Leistungsfähigkeiten des Laborgerätes ansteuerbar beziehungsweise auslesbar sind, kann vorgesehen sein, dass die Bedienelemente, beispielsweise Drehregler, Knöpfe, Touchscreens und dergleichen, bei den unterschiedlichen Fernbedienungen entsprechend dem zugänglichen Leistungsspektrum unterschiedlich ausgebildet sind. Hierzu kann vorgesehen sein, dass sich die Fernbedienungen hinsichtlich der Zahl der Knöpfe, der Funktionsbelegung der Knöpfe, der Verstellmöglichkeiten von Drehreglern oder der auf Berührung ansprechenden Felder eines Touchscreens unterscheiden, oder dass die von Bedienelementen aufgenommenen Betätigungssignale durch unterschiedlich ausgebildete Verarbeitungsbeziehungsweise Sende- und Empfangseinrichtungen an der Fernbedienung mit dem Laborgerät ausgetauscht werden.

Eine besonders einfache und mit geringem Aufwand fertigbare Baureihe von Laborgeräte-Einheiten ergibt sich jedoch, wenn alle Fernbedienungen auf dem vollen Bereich der am Laborgerät vorhandenen und/oder veränderbaren Stellgrößen und/oder erfassbaren Messgrößen ausgelegt sind und bei den Fernbedienungen, die zum Abrufen nur eines Teils der Leistungen und/oder eines Teilbereichs der Stell- und/oder Messgrößen vorgesehen sind, höherwertige Funktionen elektronisch und/oder durch Software gesperrt sind. Hierdurch ist vorteilhaft erreichbar, dass zum Nachrüsten der Funktionalität einer Laborgeräte-Einheit nicht einmal die Fernbedienung ausgetauscht werden muss, sondern dass eine Aufrüstung des Leistungsspektrums durch Einspielen einer Software beziehungsweise Eingabe eines Freischaltungscodes erreichbar ist, dass also bei einer Fernbedienung mit elektronischer oder softwaretechnischer Einschränkung der Bedienbarkeit die Einschränkung nachträglich freischaltbar ist.

Bei einer vorteilhaften Ausgestaltung der Erfindung kann vorgesehen sein, dass die zum Betätigen von Laborgeräte-Einheiten mit unterschiedlicher Leistungsfähigkeit und/oder unterschiedlichem Leistungsspektrum und/oder unterschiedlichen Stell- und/oder Messbereichen ausgelegten Fernbedienungen unterschiedliche Anzeigen aufweisen, wobei die Fernbedienung für die geringere Leistungsfähigkeit und/oder das geringere Leistungsspektrum und/oder den kleineren Stell- und/oder Messbereich eine einfache Anzeige und die Fernbedienung für höhere Leistungen und Messbereiche eine aufwändigere Anzeige aufweist. Hierdurch sind für einfachere Anwendungen ausreichende Fernbedienungen bereit gestellt, die mit dem an sich über den vollen Leistungsumfang verfügenden Laborgerät zu einer Laborgeräte-Einheit kombinierbar sind, die diesen einfachen Anforderungen genügt.

Gemäß einer Ausgestaltung kann vorgesehen sein, dass diese Anzeigen an den Fernbedienungen auswechselbar sind, wodurch das mit der Fernbedienung erreichbare Leistungsspektrum des Laborgeräts auf einfache Weise erweiterbar ist.

Zur verliersicheren Aufbewahrung der Fernbedienung kann vorgesehen sein, dass die zu dem Laborgerät gehörende Fernbedienung an dem Laborgerät lösbar fixierbar ist. Somit ist ein bevorzugter Aufbewahrungsort für die Fernbedienung ausgebildet.

Gemäß einer Ausgestaltung der Erfindung kann vorgesehen sein, dass die Fixierung für die Fernbedienung an dem Laborgerät Kontakte zum Aufladen eines als Stromquelle für die Fernbedienung dienenden Akkumulators aufweist. Somit ist die Bereitschaftszeit der Fernbedienung erhöhbar, da in Zeiten, in denen die Fernbedienung nicht benötigt wird, diese zum weiteren Gebrauch wieder aufgeladen wird.

Gemäß einer Ausgestaltung der Erfindung kann vorgesehen sein, dass die Fixierung Kontakte zum Adressieren der Fernbedienung durch das Laborgerät aufweist, an welchem die Fernbedienung fixiert ist. Durch diesen Adressiervorgang ist somit vorteilhaft eine Zuordnung zwischen der Fernbedienung und dem Laborgerät geschaffen, die Bedienstörungen oder gegenseitige Beeinträchtigungen bei Anwesenheit von mehreren Fernbedienungen und/oder mehreren Laborgeräten vermeidet. Durch die gemeinsame Ausbildung der Kontakte zum Adressieren mit den Kontakten zum Aufladen ist die einmal erfolgte Zuordnung bei jedem Ladevorgang überprüfbar beziehungsweise korrigierbar.

Gemäß einer Ausgestaltung der Erfindung kann vorgesehen sein, dass die jeweils an dem Laborgerät lösbar fixierte Fernbedienung in dieser Halteposition mechanisch und/oder elektrisch mit den Aggregaten des Laborgeräts gekoppelt ist, die die Stellgrößen und/oder Messgrößen erzeugen. Somit ist selbst bei Funkstörung und/oder Funktionsausfall der Fernbedienung eine Betätigung der Leistungsfähigkeit beziehungsweise des Leistungsspektrums des Laborgerätes möglich, indem die Fernbedienung an den für die Aufbewahrung vorgesehenen Platz angeordnet wird.

Zur Verminderung von Funkstörungen bei der Anwesenheit von einer Vielzahl von Fernbedienungen kann vorteilhaft vorgesehen sein, dass die Funkverbindung zwischen Laborgerät und Fernbedienung bei mechanisch und/oder elektrisch angekoppelter Fernbedienung deaktiviert ist und dass die Betätigungssignale der Fernbedienung über Steckkontakte übermittelbar sind. Wird diese mechanische Ankopplung mit Sicherungsmitteln sogar unlösbar fixiert, so ist somit erreicht, dass der mit der angekoppelten Fernbedienung zugängliche Funktionsbereich des Laborgeräts nicht durch Verwendung einer weiteren Fernbedienung nachträglich erweiterbar ist, ohne dass diese Sicherung geöffnet und damit die Ankopplung aufgelöst wird. Es ist somit ein vorzugsweise mit einfachem Funktionsumfang ausgebildetes, nicht nachträglich aufrüstbares Laborgerät geschaffen.

Gemäß einer Ausgestaltung der Erfindung kann vorgesehen sein, dass das Laborgerät als Stellgröße eine Wiegefunktion aufweist, die vorzugsweise durch an der Unterseite befindliche, mit einer Wiegeeinrichtung verbundene oder zu ihr gehörende Aufstellfüße verwirklicht ist. Von Vorteil ist dabei, dass diese Wiegefunktion von einem Teil der Fernbedienungen auslesbar beziehungsweise betätigbar ist, während andere Fernbedienungen mit der Wiegefunktion nicht kommunizieren können, so dass ein Benutzer der anderen Fernbedienungen von dem Vorhandensein der Wiegefunktion in seinem Laborgerät unter Umständen gar keine Kenntnis erlangt.

Gemäß einer vorteilhaften Ausgestaltung der Erfindung kann vorgesehen sein, dass das Laborgerät ein Magnetrührer ist, der mit der Fernbedienung geringeren Leistungsumfangs und/oder geringeren Leistungsspektrums bei einer geringeren Drehzahl oder innerhalb eines Bereichs geringerer Drehzahl und/oder geringeren Heiztemperatur als die dem Magnetrührer möglichen Werte ansteuerbar ist und dass mit wenigstens einer zweiten Fernbedienung die größtmöglichen Drehzahlen und/oder Heiztemperaturen und/oder eine Wiegefunktion ansteuerbar und/oder abrufbar sind.

Gemäß einer Ausgestaltung der Erfindung kann vorgesehen sein, dass mit der Fernbedienung für größere Leistungen bestimmte Steuerungsabläufe mit sich ändernden Stellgrößen und/oder Messgrößen durchführbar sind. Hierzu verfügt die Fernbedienung über entsprechende Speichermittel und Mittel zum Ausführen von Steuerprogrammen, die als entsprechende Betätigungskommandos, auch in Abhängigkeit von erfassten Messgrößen des Laborgeräts, an das Laborgerät übermittelt werden.

Die Erfindung ist weiter mit Vorteil einsetzbar bei einem Rührgerät oder einem Dispergiergerät, wobei mit einer Fernbedienung die größtmögliche Drehzahl und/oder Temperatur für eine Heizfunktion und mit wenigstens einer weiteren Fernbedienung gegenüber den Höchstwerten nur verminderte Werte für die Drehzahlen und/oder Temperaturen einstellbar sind.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale der Patentansprüche untereinander und mit den Merkmalen des Ausführungsbeispiels.

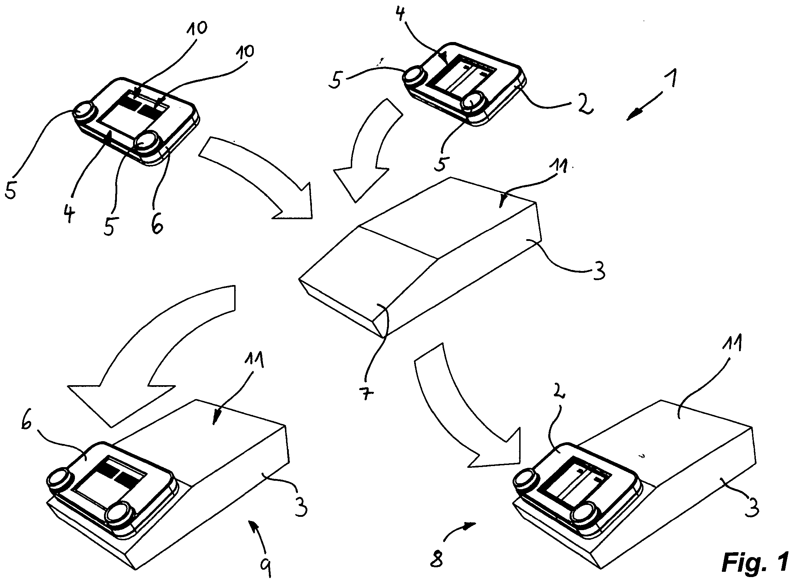

Die Figur 1 zeigt in einer Prinzipdarstellung die Verwendung unterschiedlicher Fernbedienungen zur Nutzung unterschiedlicher Leistungsspektren bei einem Laborgerät.

Eine im Ganzen mit 1 bezeichnete Laborgeräte-Einheit zum Bearbeiten und/oder Analysieren von Substanzen, Mischungen oder Medien hat eine Fernbedienung 2, die vor Beeinflussung von in der Laborgeräte-Einheit 1 vorhandenen oder veränderbaren Stellgrößen und/oder zur Erfassung von Messgrößen ausgebildet ist.

Hierzu verfügt die Laborgeräte-Einheit 1 über ein Laborgerät 3, in dem nicht näher dargestellte apparative Einrichtungen wie Antriebsmittel, Heizungen, Wiegegeräte und dergleichen angeordnet und ausgebildet sind.

Durch diese Mittel ist eine Leistungsfähigkeit beziehungsweise ein Leistungsspektrum, insbesondere ein Stell- und/oder Messbereich für Mess- und Regelgrößen vorgegeben, der durch entsprechende An- beziehungsweise Aufbauten an dem Laborgerät 3 mit der Laborgeräte-Einheit 1 nutzbar ist.

Zur Bedienung dieses Leistungsspektrums ist eine Fernbedienung 2 vorgesehen, die über entsprechende Anzeigemittel 4 und Bedienelemente 5 verfügt. Die Fernbedienung 2 ist über Funk mit einer entsprechenden Sende- und Empfangseinrichtung im Laborgerät 3 gekoppelt.

Über die Bedienelemente 5 und Anzeigemittel 4 sind die im Laborgerät 3 vorgesehenen Funktionselemente im vollen Leistungsspektrum beziehungsweise innerhalb eines durch die Fernbedienung 2 definierten Stell- und/oder Messbereichs veränderbar beziehungsweise deren Signale und/oder Daten auslesbar.

Für eine Nutzung des Funktionsspektrums der Laborgeräte-Einheit 1 in eingeschränktem Umfang ist eine weitere Fernbedienung 6 vorgesehen, die ebenfalls über Bedienelemente 5 und Anzeigemittel 4 verfügt, mit denen aber die Laborgeräte-Einheit 1 in einem bezüglich Leistung und/oder Spektrum und/oder Stell- und/oder Messbereich gegenüber der Fernbedienung 2 eingeschränkten Umfang nutzbar ist, obwohl das Laborgerät 3 weiterhin das volle Leistungsspektrum bereitstellt.

Auch die weitere Fernbedienung 6 ist über eine Funkverbindung mit der Sende- und Empfangseinheit im Laborgerät 3 verbunden.

Das Laborgerät 3 bietet dem Betrachter eine nach außen einheitlich wirkende Oberfläche, die keinen Rückschluss über die tatsächlich in dem Laborgerät 3 vorhandenen Funktionselemente erlaubt.

An dem Laborgerät 3 ist ein Aufnahmebereich 7 ausgebildet, an welchem wahlweise die Fernbedienung 2 oder die Fernbedienung 6 lösbar fixierbar ist.

Wird die Fernbedienung 2 mit dem Laborgerät 3 kombiniert, so ergibt sich eine erste Variante 8 der Laborgerät-Baureihe mit dem durch die Fernbedienung 2 definierten Leistungsspektrum beziehungsweise Funktionsumfang.

Wird dagegen das Laborgerät 3 mit der weiteren Fernbedienung 6 kombiniert, so ergibt sich eine zweite Variante 9 der Laborgerät-Baureihe, deren Funktionsumfang beziehungsweise Leistungsspektrum durch die weitere Fernbedienung 6 definiert wird.

Die jeweilige Kombination ergibt sich bereits durch Herstellen des Funkkontakts zwischen Fernbedienung 2, 6 und Laborgerät 3.

In dem Aufnahmebereich 7 sind nicht weiter dargestellte Stecckontakte ausgebildet, die bei der Fixierung der Fernbedienung 2 oder der weiteren Fernbedienung 6 an dem Laborgerät 3 mit an den Fernbedienungen 2, 6 ausgebildeten, ebenfalls nicht weiter dargestellten Gegensteckverbindungen in Steckkontakt geraten.

Durch diesen Steckkontakt wird ein in den Fernbedienungen 2, 6 vorgesehener Akkumulator aufgeladen, und es wird der Funkkontakt zwischen Fernbedienung 2, 6 und Laborgerät 3 deaktiviert, wobei die Steuersignale zwischen Fernbedienung 2, 6 und Laborgerät 3 nach dieser Fixierung der Fernbedienung 2, 6 im Aufnahmebereich 7 über die Steckkontakte übertragen werden.

Bei dem gezeigten Ausführungsbeispiel sind die Bedienelemente 5 der Fernbedienungen 2, 6 gleich ausgebildet, während sich die Anzeigemittel 4 hinsichtlich der darstellbaren Informationen unterscheiden.

So weist das Anzeigemittel 4 der weiteren Fernbedienung 6 lediglich zwei Datenfelder 10 auf, an denen die mit den Bedienelementen 5 einstellbaren Zahlenwerte dargestellt werden, während die Anzeige 4 der Fernbedienung 2 eine komplexere Struktur hat, die die Darstellung von zusätzlichen Funktionen oder sogar die Darstellung von Steuerungsabläufen ermöglicht.

Die Figur 1 zeigt lediglich eine schematische Darstellung der Laborgeräte-Einheit 1, wobei auf eine Darstellung der einzelnen Funktionselemente und An- und Aufbauten, die durch die Fernbedienungen 2, 6 ansteuerbar beziehungsweise auslesbar sind, aus Gründen der Übersichtlichkeit verzichtet wurde.

Bei einem Ausführungsbeispiel weist die Laborgeräte-Einheit 1 einen Magnetrührer auf, der in dem Laborgerät 3 angeordnet ist. Dieser Magnetrührer ist bei diesem Ausführungsbeispiel nutzbar, indem ein Gefäß mit einem Rührelement auf die an dem Laborgerät 3 ausgebildete Arbeitsplattform 11 aufgesetzt wird, wodurch das Rührelement magnetisch an den Magnetrührer im Laborgerät 3 angekoppelt wird.

Bei diesem Ausführungsbeispiel ist im Laborgerät 3 zusätzlich eine Heizung vorgesehen, durch die eine Substanz in dem auf die Arbeitsplattform 11 aufgesetzten Gefäß beheizbar ist.

Je nach bereitgestelltem Funktionsumfang ist mit den Fernbedienungen 2, 6 ein Drehzahlbereich des Magnetrührers beziehungsweise ein Temperaturbereich der Heizung ansteuerbar.

In die Füße des Laborgeräts 3 ist bei diesem Ausführungsbeispiel zusätzlich eine Wiegeeinrichtung integriert, die mit der Fernbedienung 2 auslesbar ist, indem an der Anzeige 4 der Fernbedienung 2 das aktuell ermittelte Gewicht angezeigt wird.

Mit der Fernbedienung 6 ist diese Wiegeeinrichtung dagegen nicht nutzbar, da die Anzeige 4 über keine Möglichkeit zur Anzeige des aktuell mit der Wiegeeinrichtung bestimmten Gewichts verfügt.

Ohne die Fernbedienung 2 ist es somit für einen Benutzer nur durch Demontage beziehungsweise Zerstörung des Laborgeräts 3 möglich, das Vorhandensein einer Wiegeeinrichtung im Laborgerät 3 festzustellen.

Bei diesem Ausführungsbeispiel ist zusätzlich eine weitere Fernbedienung verfügbar, die nicht in der Figur 1 gezeigt ist, und die nur die Ansteuerung der Drehzahl des Magnetrührers, nicht aber die Ansteuerung der Heizung ermöglicht.

Bei der Laborgeräte-Einheit 1 zum Bearbeiten oder Analysieren von Substanzen, Mischungen oder Medien mit Funktionselementen zum Ausführen dieses Bearbeitens und/oder Analysierens, die in oder an einem, ein Grundgerät bildenden Laborgerät 3 ausgebildet sind, sind wenigstens zwei Fernbedienungen 2, 6 vorgesehen, wobei mit einer Fernbedienung 6 das Leistungsspektrum der Funktionselemente in geringerem Umfang nutzbar ist als mit der anderen Fernbedienung 2.

## Patentansprüche

1. Laborgeräte-Einheit zum Bearbeiten von Substanzen, Mischungen oder Medien mit einem Laborgerät (3) und mit einer Fernbedienung (2, 6) für die in dem Laborgerät (3) vorhandenen oder veränderbaren Stellgrößen und/oder erfassbaren Messgrößen, wobei das Laborgerät (3) hinsichtlich seiner Stell- und/oder Messgrößen mit einem vollen Stell- und/oder Messbereich ausgestattet ist, **dadurch gekennzeichnet, dass** die Fernbedienung (2, 6) auf den vollen Bereich der am Laborgerät (3) vorhandenen und/oder veränderbaren Stellgrößen und/oder erfassbaren Messgrößen ausgelegt ist und dass Funktionen der Fernbedienung (2, 6) elektronisch und/oder durch Software derart freischaltbar gesperrt sind, dass nur ein eingeschränkter Stell- und/oder Messbereich des Laborgeräts (3) betätigbar und/oder nur ein Teil der Stell- und/oder Messgrößen des Laborgeräts (3) abrufbar oder ansteuerbar oder regelbar ist, wobei das Laborgerät (3) als Stellgröße eine Wiegefunktion aufweist und/oder ein Rührgerät oder ein Dispergiergerät oder ein Magnetrührer ist.

2. Laborgeräte-Einheit nach Anspruch 1, **dadurch gekennzeichnet, dass** wenigstens eine weitere Fernbedienung (6) vorgesehen ist, die für Zwischenwerte betreffend den Stell- und/oder Messbereich des Laborgeräts (3) ausgelegt ist.

3. Laborgeräte-Einheit nach Anspruch 1 oder 2, **dadurch gekennzeichnet, dass** eine zusätzliche Fernbedienung (6) vorgesehen ist, mit welcher nur ein Teil der Stellgrößen und/oder Messgrößen des Laborgeräts (3) abrufbar oder ansteuerbar oder regelbar ist.

4. Laborgeräte-Einheit nach einem der Ansprüche 1 bis 3, **dadurch gekennzeichnet, dass** bei einer Fernbedienung (2, 6) mit elektronischer oder softwaretechnischer Einschränkung der Bedienbarkeit die Einschränkung nachträglich freischaltbar ist.

5. Laborgeräte-Einheit nach Anspruch 3 oder 4, **dadurch gekennzeichnet, dass** die zum Betätigen des Laborgeräts (3) mit unterschiedlichen Stell- und/oder Messbereichen ausgelegten Fernbedienungen unterschiedliche Anzeigen (4) aufweisen, wobei die Fernbedienung (2, 6) für den kleineren Stell- und/oder Messbereich eine einfache Anzeige (4) und die Fernbedienung (2, 6) für höhere Messbereiche eine aufwendigere Anzeige (4) aufweisen.

6. Laborgeräte-Einheit nach Anspruch 5, **dadurch gekennzeichnet, dass** die Anzeigen an den Fernbedienungen (2, 6) auswechselbar sind.

7. Laborgeräte-Einheit nach einem der Ansprüche 1 bis 6, **dadurch gekennzeichnet, dass** die zu ihm gehörende Fernbedienung (2, 6) an dem Laborgerät (3) lösbar fixierbar ist.

8. Laborgeräte-Einheit nach Anspruch 7, **dadurch gekennzeichnet, dass** die Fixierung für die Fernbedienung (2, 6) an dem Laborgerät (3) Kontakte zum Aufladen eines als Stromquelle für die Fernbedienung (2, 6) dienenden Akkumulators aufweist.

9. Laborgeräte-Einheit nach Anspruch 7 oder 8, **dadurch gekennzeichnet, dass** die Fixierung Kontakte zum Adressieren der Fernbedienung (2, 6) durch das Laborgerät (3) aufweist, an welchem die Fernbedienung (2, 6) fixiert ist.

10. Laborgeräte-Einheit nach einem der Ansprüche 7 bis 9, **dadurch gekennzeichnet, dass** die jeweils an dem Laborgerät (3) lösbar fixierte Fernbedienung (2, 6) in dieser Halteposition mechanisch und/oder elektrisch mit den Aggregaten des Laborgeräts (3) gekoppelt ist, die die Stellgrößen und/oder Messgrößen erzeugen.

11. Laborgeräte-Einheit nach einem der Ansprüche 1 bis 10, **dadurch gekennzeichnet, dass** die Funkverbindung zwischen Laborgerät (3) und Fernbedienung (2, 6) bei mechanisch und/oder elektrisch angekoppelter Fernbedienung (2, 6) deaktiviert ist und die Betätigungssignale über Steckkontakte übermittelbar sind.

12. Laborgeräte-Einheit nach einem der Ansprüche 1 bis 11, **dadurch gekennzeichnet, dass** es als Stellgröße eine Wiegefunktion aufweist, die durch an der Unterseite befindliche, mit einer Wiegeeinrichtung verbundene oder zu ihr gehörende Aufstellfüße verwirklicht ist.

13. Laborgeräte-Einheit nach einem der Ansprüche 2 bis 12, **dadurch gekennzeichnet, dass** das Laborgerät (3) ein Magnetrührer ist, der mit der anderen Fernbedienung (6) bei einer geringeren oder innerhalb eines Bereichs geringerer Drehzahl und/oder geringeren Heiztemperatur als die dem Magnetrührer möglichen Werte ansteuerbar ist und dass mit wenigstens der einen Fernbedienung (2) die größtmöglichen Drehzahlen und/oder Heiztemperaturen und/oder eine Wiegefunktion ansteuerbar und/oder abrufbar sind.

14. Laborgeräte-Einheit nach einem der Ansprüche 1 bis 13, **dadurch gekennzeichnet, dass** mit der einen Fernbedienung (2) bestimmte Steuerungsabläufe mit sich ändernden Stellgrößen und/oder Messgrößen durchführbar sind.

15. Laborgeräte-Einheit nach einem der Ansprüche 1 bis 14, **dadurch gekennzeichnet, dass** das Laborgerät (3) ein Rührgerät oder ein Dispergiergerät ist und dass mit einer Fernbedienung (2) die größtmögliche Drehzahl und/oder Temperatur und mit wenigstens einer weiteren Fernbedienung (6) gegenüber den Höchstwerten nur verminderte Werte für die Drehzahlen und/oder Temperaturen einstellbar sind.

## Claims

1. Laboratory device unit for processing substances, mixtures or media, comprising a laboratory device (3) and comprising a remote control (2, 6) for the adjustment variables that are present or alterable and/or the measurement variables that are detectable in the laboratory device (3), the laboratory device (3) being equipped with a full adjustment and/or measurement range with regard to its adjustment and/or measurement variables, **characterized in that** the remote control (2, 6) is designed for the full range of the adjustment variables that are present and/or alterable and/or the measurement variables that are detectable on the laboratory device (3), and **in that** functions of the remote control (2, 6) are releasably blocked electronically and/or by software in such a way that only a restricted adjustment and/or measurement range of the laboratory device (3) is actuable and/or only a portion of the adjustment and/or measurement variables of the laboratory device (3) is retrievable or controllable or regulatable, the laboratory device (3) having a weighing function as adjustment variable and/or being a stirring device or a dispersing device or a magnetic stirrer.

2. Laboratory device unit according to Claim 1, **characterized in that** at least one further remote control (6) is provided, which is designed for intermediate values in regard to the adjustment and/or measurement range of the laboratory device (3).

3. Laboratory device unit according to Claim 1 or 2, **characterized in that** an additional remote control (6) is provided, by way of which only a portion of the adjustment variables and/or measurement variables of the laboratory device (3) is retrievable or controllable or regulatable.

4. Laboratory device unit according to any of Claims 1 to 3, **characterized in that** in the case of a remote control (2, 6) with electronic or software-based restriction of operability, the restriction is subsequently releasable.

5. Laboratory device unit according to Claim 3 or 4, **characterized in that** the remote controls designed for actuating the laboratory device (3) with different adjustment and/or measurement ranges have different displays (4), the remote control (2, 6) for the smaller adjustment and/or measurement range having a simple display (4) and the remote control (2, 6) for higher measurement ranges having a more complex display (4).

6. Laboratory device unit according to Claim 5, **characterized in that** the displays on the remote controls (2, 6) are interchangeable.

7. Laboratory device unit according to any of Claims 1 to 6, **characterized in that** the remote control (2, 6) associated with the laboratory device (3) is detachably fixable thereon.

8. Laboratory device unit according to Claim 7, **characterized in that** the fixing for the remote control (2, 6) on the laboratory device (3) has contacts for charging a rechargeable battery serving as a power source for the remote control (2, 6).

9. Laboratory device unit according to Claim 7 or 8, **characterized in that** the fixing has contacts for the addressing of the remote control (2, 6) by the laboratory device (3) on which the remote control (2, 6) is fixed.

10. Laboratory device unit according to any of Claims 7 to 9, **characterized in that** the remote control (2, 6) that is respectively detachably fixed on the laboratory device (3), in this holding position, is mechanically and/or electrically coupled to the components of the laboratory device (3) that generate the adjustment variables and/or measurement variables.

11. Laboratory device unit according to any of Claims 1 to 10, **characterized in that** the radio connection between the laboratory device (3) and the remote control (2, 6) is deactivated for the mechanically and/or electrically coupled remote control (2, 6) and the actuation signals are communicateable via plug-in contacts.

12. Laboratory device unit according to any of Claims 1 to 11, **characterized in that** it has a weighing function as adjustment variable, said weighing function being realized by placement feet that are situated at the underside and are connected to or associated with a weighing apparatus.

13. Laboratory device unit according to any of Claims 2 to 12, **characterized in that** the laboratory device is a magnetic stirrer (3), which is controllable by way of the other remote control (6) at a lower rotational speed or rotational speed that is lower within a range and/or at a lower heating temperature than the values possible for the magnetic stirrer (3), and **in that** the maximum rotational speeds and/or heating temperatures and/or a weighing function are/is controllable and/or retrievable by way of at least the first remote control (2).

14. Laboratory device unit according to any of Claims 1 to 13, **characterized in that** specific control sequences with changing adjustment variables and/or measurement variables are implementable by way of the first remote control (2).

15. Laboratory device unit according to any of Claims 1 to 14, **characterized in that** the laboratory device is a stirring device or a dispersing device (3), and **in that** the maximum rotational speed and/or temperature are/is settable by way of one remote control (3) and only reduced values for the rotational speeds and/or temperatures by comparison with the maximum values are settable by way of at least one further remote control (6).

## Revendications

1. Unité d'appareil de laboratoire pour le traitement de substances, de mélanges ou de fluides, comprenant un appareil de laboratoire (3) et une télécommande (2, 6) pour les grandeurs de réglage présentes ou modifiables dans l'appareil de laboratoire (3) et/ou les grandeurs de mesure détectables, l'appareil de laboratoire (3) étant doté d'une plage de réglage et/ou de mesure complète par rapport à ses grandeurs de réglage et/ou de mesure, **caractérisé en ce que** la télécommande (2, 6) est adaptée à la plage complète des grandeurs de réglage présentes et/ou modifiables dans l'appareil de laboratoire (3) et/ou des grandeurs de mesure détectables et que des fonctions de la télécommande (2, 6) sont verrouillées de façon commutable électroniquement et/ou par un logiciel de telle sorte que seule une plage de réglage et/ou de mesure limitée de l'appareil de laboratoire (3) est activable et/ou que seule une partie des grandeurs de réglage et/ou de mesure de l'appareil de laboratoire (3) est consultable ou contrôlable ou réglable, l'appareil de laboratoire (3) présentant une fonction de pesage comme en guise de réglage et/ou étant un mélangeur ou un disperseur ou un agitateur magnétique.

2. Unité d'appareil de laboratoire selon la revendication 1, **caractérisé en ce qu'**il est prévu au moins une autre télécommande (6) qui est adaptée pour des valeurs intermédiaires concernant la plage de réglage et/ou de mesure de l'appareil de laboratoire (3).

3. Unité d'appareil de laboratoire selon la revendication 1 ou 2, **caractérisé en ce qu'**il est prévu une télécommande supplémentaire (6) avec laquelle seule une partie des grandeurs de réglage et/ou des grandeurs de mesure de l'appareil de laboratoire (3) est activable ou contrôlable ou réglable.

4. Unité d'appareil de laboratoire selon une des revendications 1 à 3, **caractérisé en ce que**, dans le cas d'une télécommande (2, 6) dotée d'une limitation électronique ou par logiciel de l'utilisation, la limitation est commutable a posteriori.

5. Unité d'appareil de laboratoire selon la revendication 3 ou 4, **caractérisé en ce que** les télécommandes conçues pour l'activation de l'appareil de laboratoire (3) avec différentes plages de réglage et/ou de mesure présentent différents afficheurs (4), la télécommande (2, 6) pour la plage de réglage et/ou de mesure la plus faible étant un afficheur (4) simple et la télécommande (2, 6) pour les plages de mesure plus élevées étant un afficheur (4) plus sophistiqué.

6. Unité d'appareil de laboratoire selon la revendication 5, **caractérisé en ce que** les afficheurs sur les télécommandes (2, 6) sont interchangeables.

7. Unité d'appareil de laboratoire selon une des revendications 1 à 6, **caractérisé en ce que** la télécommande (2, 6) appartenant à l'appareil de laboratoire (3) peut être fixée de façon détachable sur celui-ci.

8. Unité d'appareil de laboratoire selon la revendication 7, **caractérisé en ce que** la fixation pour la télécommande (2, 6) sur l'appareil de laboratoire (3) comporte des contacts pour le chargement d'un accumulateur servant de source d'alimentation électrique pour la télécommande (2, 6).

9. Unité d'appareil de laboratoire selon la revendication 7 ou 8, **caractérisé en ce que** la fixation comporte des contacts pour l'adressage de la télécommande (2, 6) par l'appareil de laboratoire (3) sur lequel la télécommande (2, 6) est fixée.

10. Unité d'appareil de laboratoire selon une des revendications 7 à 9, **caractérisé en ce que** la télécommande (2, 6) fixée de façon détachable sur l'appareil de laboratoire (3) est couplée mécaniquement et/ou électriquement dans cette position de maintien avec les composants de l'appareil de laboratoire (3) qui génèrent les grandeurs de réglage et/ou les grandeurs de mesure.

11. Unité d'appareil de laboratoire selon une des revendications 1 à 10, **caractérisé en ce que**, dans le cas d'une télécommande (2, 6) couplée mécaniquement et/ou électriquement, la liaison radio entre l'appareil de laboratoire (3) et la télécommande (2, 6) est désactivée et les signaux d'activation peuvent être transmis par des contacts enfichables.

12. Unité d'appareil de laboratoire selon une des revendications 1 à 11, **caractérisé en ce qu'**il présente en guise de grandeur de réglage une fonction de pesage qui est mise en oeuvre par des pieds de montage se trouvant sur la face inférieure, reliés à un dispositif de pesage ou faisant partie de celui-ci.

13. Unité d'appareil de laboratoire selon une des revendications 2 à 12, caractérisé en l'appareil de laboratoire est un agitateur magnétique (3) qui peut être contrôlé avec l'autre télécommande (6) en cas de vitesse de rotation plus faible ou plus faible à l'intérieur d'une plage et/ou de température de chauffage inférieure aux valeurs possibles pour l'agitateur magnétique (3), et que les vitesses de rotation et/ou les températures de chauffage les plus élevées possible et/ou une fonction de pesage peuvent être contrôlées et/ou consultées avec au moins la télécommande (2).

14. Unité d'appareil de laboratoire selon une des revendications 1 à 13, **caractérisé en ce que** des opérations de commande déterminées avec la télécommande (2) sont exécutables avec des grandeurs de réglage et/ou des grandeurs de mesure variables.

15. Unité d'appareil de laboratoire selon une des revendications 1 à 14, **caractérisé en ce que** l'appareil de laboratoire est un mélangeur ou un disperseur (3) et que la vitesse de rotation et/ou la température les plus élevées possible peuvent être réglées avec une télécommande (3) et uniquement des valeurs réduites par rapport aux valeurs maximales de vitesse de rotation et/ou de température avec une autre télécommande (6).
